# EUROPEAN PATENT SPECIFICATION

(11) **EP 1 348 248 B1**
(45) Date of publication and mention of the grant of the patent: **31.05.2006**
(21) Application number: 01981949.9
(22) Date of filing: 30.10.2001
(51) Int. Cl.: H02G 9/04, H02G 15/02, H02G 15/113, H02G 1/14, H01R 13/52, H01H 85/56, H01R 13/05

(54) **MULTI-CORE ELECTRICAL CABLE CONNECTION APPARATUS**
VERBINDUNGSVORRICHTUNG FÜR MEHRADRIGES ELEKTRISCHES KABEL
SYSTEME D'INTERCONNEXION DE CABLES ELECTRIQUES A AMES MULTIPLES

(30) Priority: 27.11.2000 AU PR169700; 20.12.2000 AU PR218900; 12.02.2001 AU PR302901; 04.05.2001 AU PR478601
(43) Date of publication of application: 01.10.2003
(73) Proprietor: Tappat Engineering Pty. Limited, Brookvale, NSW 2100 (AU)
(72) Inventor: DANNENBERG, Patrick, Paul, Brookvale, New South Wales 2100 (AU)
(74) Representative: Hogg, Jeffery Keith
(86) International application number: PCT/AU2001/001394
(87) International publication number: WO 2002/043215

(56) References cited:
- EP-A- 0 038 206
- EP-B1- 0 024 882
- DE-A- 19 841 326
- GB-A- 522 711
- US-A- 4 554 401
- US-A- 5 594 210
- US-A- 5 859 580
- PATENT ABSTRACTS OF JAPAN & JP 10 042 443 A (JAPAN RIICOM KK ET AL.) 13 February 1998

## Description

### Field of the invention

This invention relates to a cable connection apparatus, in particular, cable connection apparatus suitable for connecting high current low voltage multi-core cables at a location where a switch or take-off connection is required.

### Background of the invention

The supply of electricity to domestic, commercial and industrial properties is achieved by installing a grid or network of high current carrying cables in an area where electrical connections are to be made. Preferably the creation of the network is undertaken during the establishment of a particular neighbourhood or facility, although of course recabling, and extensions of existing cabling, are often undertaken. Preferably all such cabling is buried under ground in specially constructed hollow pipes or service tunnels. Underground electrical services have one particular disadvantage and that is that the connection points of the cables, particularly at distribution points, can sometimes be submerged. For this reason considerable care has to be taken to ensure that water does not form a short circuit between different electrical cables or short circuit the supply to earth.

Prior art installations have generally been extremely robust and bulky. Such systems have therefore been costly to install and have occupied significant space requiring large underground excavation and civil works. Prior art systems have also suffered from the disadvantage of being particularly time consuming to make all the necessary connections.

Armoured electrical cables used to distribute power in domestic and commercial locations are frequently laid in trenches or conduits located relatively close to the surface. This provides for ready availability and accessibility of the cable, and also reduces the ground work which needs to be done in order to lay the cable.

It is important that the connection of below ground electrical connections is protected against the ingress of moisture. In some underground locations there can be a problem of flooding of the excavation where the connection is located and therefor it is important that any exposed electrical conduits, particularly at the connection points, are properly protected against moisture contact.

It is also important that the underground structure which is constructed to house a connection box is made as small as practicable in order to reduce the civil works necessary for installation. One problem with constructing a relatively small underground structure, particularly where the cables are laid relatively close to the surface, is that the cables tend to be externally armoured and have a relatively large minimum radius of curvature. Cables will tend to extend laterally to opposite sides of the underground structure, and then need to be curved or bent upwardly so that the end portions of the two cables are substantially vertical and parallel so as to be able to make the necessary connection. Since the cables have a large radius of curvature, and are relatively rigid, curving or bending the cables, and making the connection, and then fitting a water proof housing over the connection, becomes an arduous task, particularly when undertaken in the confines of a relatively small underground structure.

GB-A-522711 discloses a detachable switch unit.

### Summary of the Invention

The invention is defined by the appended claims, to which reference should now be made.

### Brief Description of the Drawings

By way of example only, certain embodiments of the invention will now be described with reference to the accompanying drawings, in which:
Fig. 1 shows a side view of an excavation at the location where two cables are to be connected;
Fig. 2 shows the two cables secured together with a bracket;
Fig. 3 shows a perspective view of two cables connected together with a bracket with one of the cables having its protective sheet stripped therefrom;
Fig. 4 shows a side view of the two cables partially connected together;
Fig. 5 shows a side view of the two cables connected together, still with the bracket in position;
Fig. 6 shows a perspective view of the connected cables together with a housing for enclosing the connection;
Fig. 7 shows a side view of the connection with the housing in operative position;
Fig. 8 shows a side view with the housing in position and in which the housing is enclosed within a moisture excluding dome;
Fig. 9 shows a side view of the connection in cross section view with the installation substantially completed;
Fig. 10 shows a side view of the completed connection;
Fig. 11 shows a plan view of the completed connection;
Fig. 12 is an exposed perspective of an alternative arrangement;
Fig. 13 illustrates a portion of the arrangement of Fig. 12;
Fig. 14 is a sectional view through an assembled form of the second arrangement;
Fig. 15 is a sectional view through a portion of the second arrangement;
Fig. 16 shows a perspective view of a further arrangement with the conduits in an assembled condition.
Fig. 17 shows a plan view of a base member used in the assembly of Fig. 16 with the conduits in position.
Fig. 18 shows a side view of the base member shown in Fig. 17 with the conduits in position.
Fig. 19 shows a plan view of the connector blocks for the system shown in Fig. 16 in the assembled condition.
Fig. 20 shows an exploded perspective view of a connector block for the system shown in Fig. 16.
Fig. 21 shows a side view of the threaded stud used for mounting conduits to the connector block shown in Fig. 20.
Fig. 22 shows a sectional view of the stud shown in Fig. 21.
Fig. 23 shows perspective view of the system in which the conduits are encapsulated within a resin material.
Fig. 24 shows a perspective view of a second further arrangement with conduits connected to switched connector blocks.
Fig. 25 shows an exploded perspective view of a switched connector block.
Fig. 26 shows a perspective view of three switched connector blocks with one of the removable bridges removed from its connector block.
Fig. 27 shows a plan view of three connector blocks aligned side by side.
Fig. 28 shows a sectional view along line XII-XII depicted in Fig. 27.
Fig. 29 shows a perspective view of the system shown in Fig. 24 with the conduits encapsulated in a settable resin material.
Fig. 30 is an exploded perspective view of a portion a further alternative arrangement.
Fig. 31 is a perspective view illustrating the assembly process of the further alternative arrangements.
Fig. 32 is a further perspective view of the assembly process of the further arrangement.
Fig. 33 illustrates the assembled form of the further alternative arrangement.
Fig. 34 is an exploded perspective view of a fuse switch.
Fig. 35 illustrates a generator distribution link switch utilised with the preferred arrangement.

### Detailed description of the embodiments

As shown in the drawings two cables, numbered 10 and 12, are connected together within an excavation 14 so that the connection of the cables is below ground level 16. It is important that the excavation 14 is kept to a relatively small size so that the civil work associated with completing the connection is kept to a relatively small scale.

The cables 10 and 12 will extend laterally to opposite sides of the excavation 14, the cables 10 and 12 being laid substantially horizontally but relatively close to the ground surface 16. In a typical arrangement the cables 10 and 12 might be between about 400 mm and 1000mm below the ground surface 16.

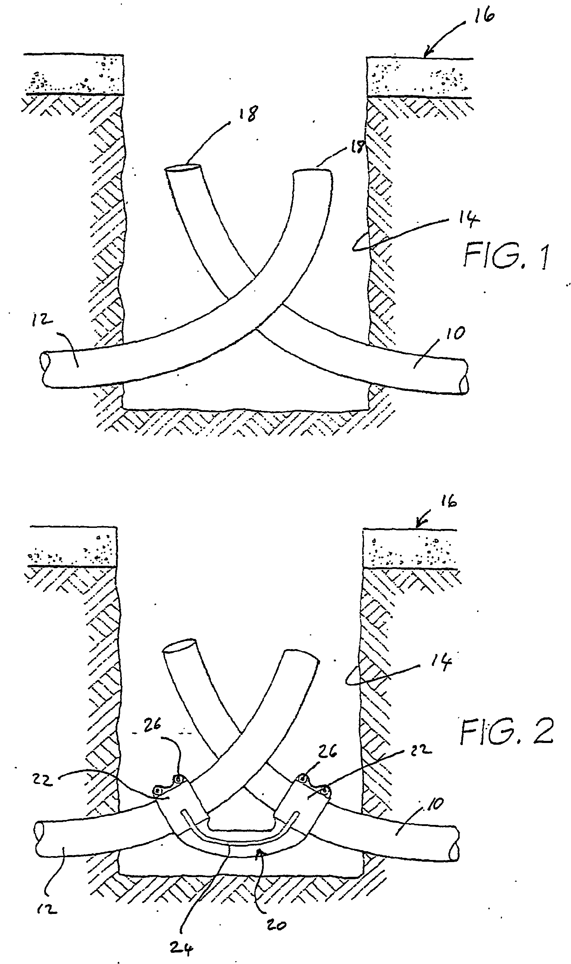

Multi-core cables of the type with which the embodiment is adapted to be used are relatively rigid and typically have an armoured multi-strand earth and waterproof outer sheath which significantly increases the rigidity of the cable. The cables as shown in Fig. 1 have been bent to substantially their minimum radius of curvature within the excavation 14 but in that position the ends 18 of the two cables are still relatively far apart.

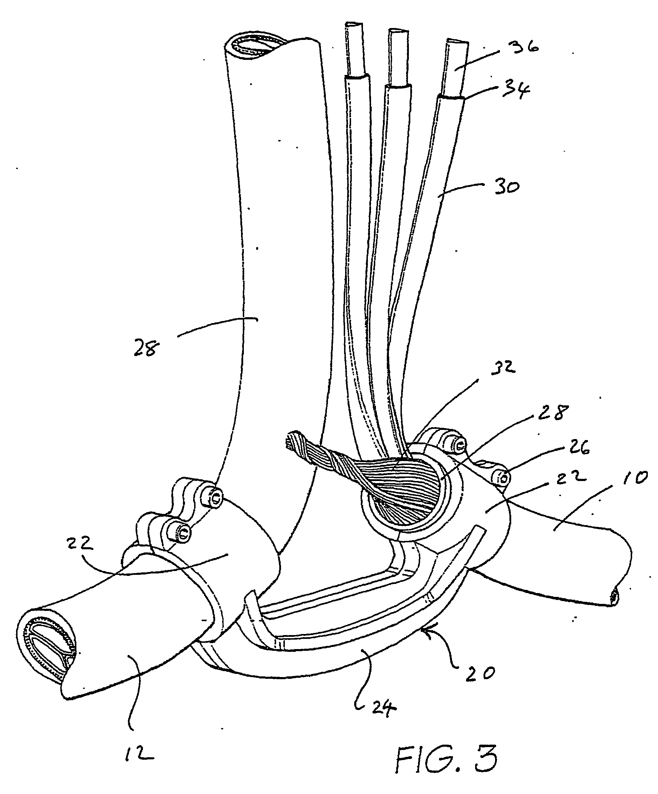

To facilitate the connecting together of the cores of the two cables 10 and 12, a bracket 20 is fitted to the two cables as shown clearly in Fig. 2 of the drawings. The bracket 20 comprises a pair of cable gripping collars 22 connected together by a rigid arm 24. The bracket 20 is formed of two identical halves which are bolted together around the cables as shown by fasteners 26. When the bracket is in position as shown in Fig. 2, the two cables 10 and 12 will be held together rigidly and in the optimal alignment relative to each other for completing the connection. It will be appreciated that fitting the bracket 20 in position will be reasonably easy to achieve, although the cables are relatively rigid, since they will still be able to be manipulated and bent by workers operating from outside the excavation 14.

As shown in Fig. 3, the outer sheath 28 of the cable 10 has been cut away from the cores 30 and the armoured earth sheath 32. Each of the cores 30 has an insulating sheath 34 surrounding the conductor 36 which is stripped away shown in Fig. 3 to allow for the connection of those cores together in the manner described below. It will be appreciated from Fig. 3 that with the bracket 20 in position the two cables 10 and 12 are held facing each other at an optimal angle, given the practical limitation on curvature of the cables to thereby allow the two sets of cores 30 to be connected together whilst the cables 10 and 12 are held in their optimal relative positions.

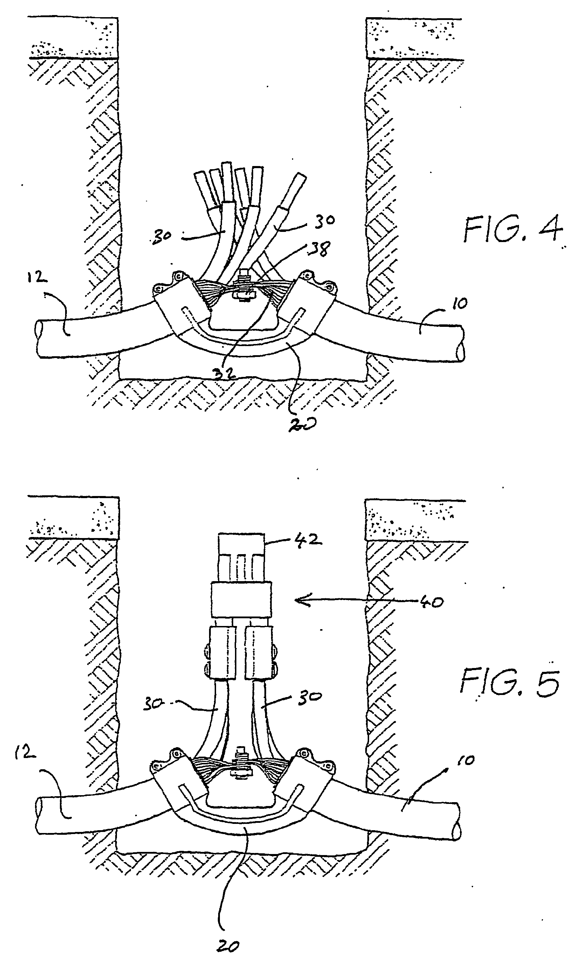

Fig. 4 depicts the arrangement when the sheath 28 has been cut from both cables 10 and 12 and the ends of the cores 30 have been stripped of their protective sheaths to facilitate connection. In addition, the multi-strand earth cables 32 have been connected together by means of a bolt and nut assembly 38, and the bracket 20 still holds the two cables 10 and 12 relative to each other.

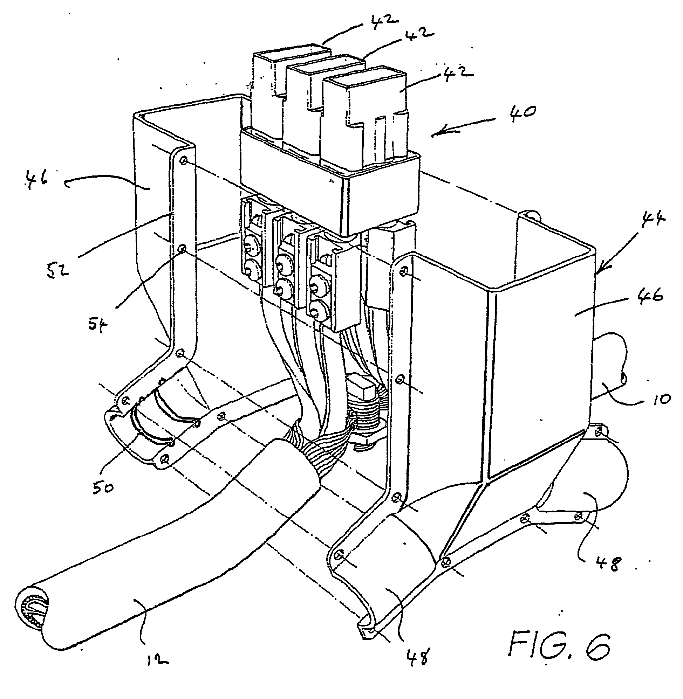

Fig. 5 depicts a switch connection block 40 mounted to the ends of the cores 30. The switch connection block has three upper switch housings 42 adapted to receive switching means (not shown) to either connect or disconnect the connection between respective cores in use. The switch connector block 40 is shown in more detail in Fig. 6 of the drawings from which it is clear that each pair of cores 30 can be individually switched, with a separate switch being located in each of the respective housings 42.

Once the switch connector block is in position and the nut and bolt assembly 38 ties the earth cables together, the connection will be relatively rigid and the bracket 20 can be removed from the cables 10 and 12. Because the connection, at this point, is relatively rigid, the cables will not tend to move apart or change their orientation relative to each other. Thus, a housing 44 can be fitted around the connection.

The housing 44 is comprised of two substantially identical shells 46 which are adapted to be bolted together around the connection. The housing 44, when assembled, defines a pair of lower apertures 48 which are adapted to locate around and seal with the outer surface of the cables 10 and 12. The apertures 48 include an O-ring type seal which locates in grooves 50 located within the inside of the apertures 48. The shells 46 include flanges 52 in which a series of holes 54 are located for receiving nut and bolt assemblies for bolting the two shells together around the connection, thereby defining an open topped housing which is sealed to the cables 10 and 12 and is sealed at the interface between the two shells. If necessary, sealing means such as an adhesive may be placed at the interface between the two shells to ensure a waterproof seal at that interface.

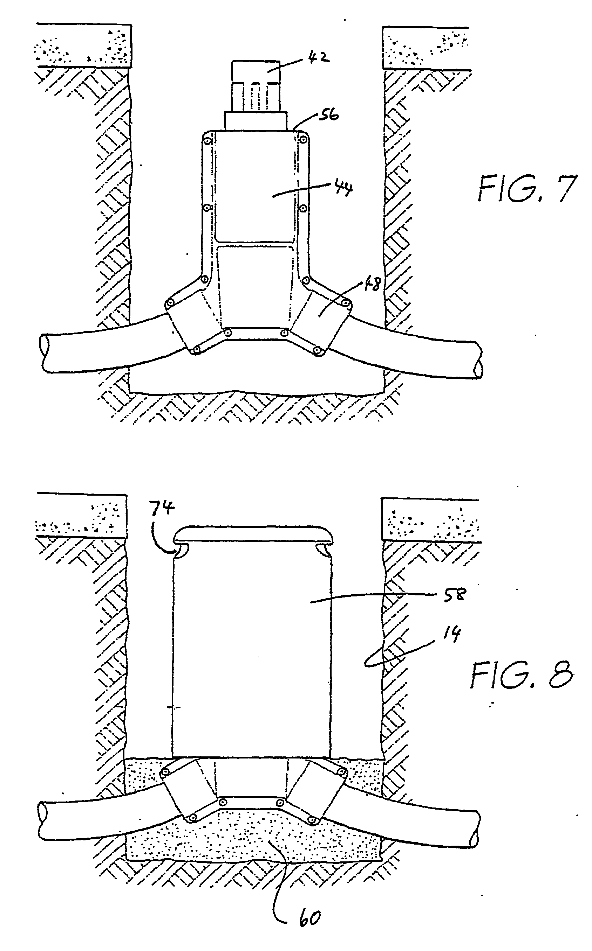

As will be clear from Fig. 7 of the drawings, when the two shells are bolted together the switch housings 42 of the connection extends out of the open upper end 36 of the housing 44 since in use it is necessary to have access to the switch housings 42. When the shells are bolted together a resin, or other suitable non-electrically conductive settable material, can be poured into the open top 56 of the housing 44 to fully encapsulate the connection in that resin material. This will have the effect of excluding moisture from the connection, even where the connection lies in water, as occurs from time to time in underground installations.

A further water exclusion device comprising an inverted cylindrically shaped air tight dome 58 is placed over the housing 44, the dome 58 being used to exclude moisture from the connection, even in situations where the connection is fully immersed in water. Furthermore, as shown in Fig. 8, the excavation can at this stage be completed. A sand, or similar material has been filled into the bottom of the excavation 14 the sand 16 forming a pervious base for the excavation and providing added support for the cables.

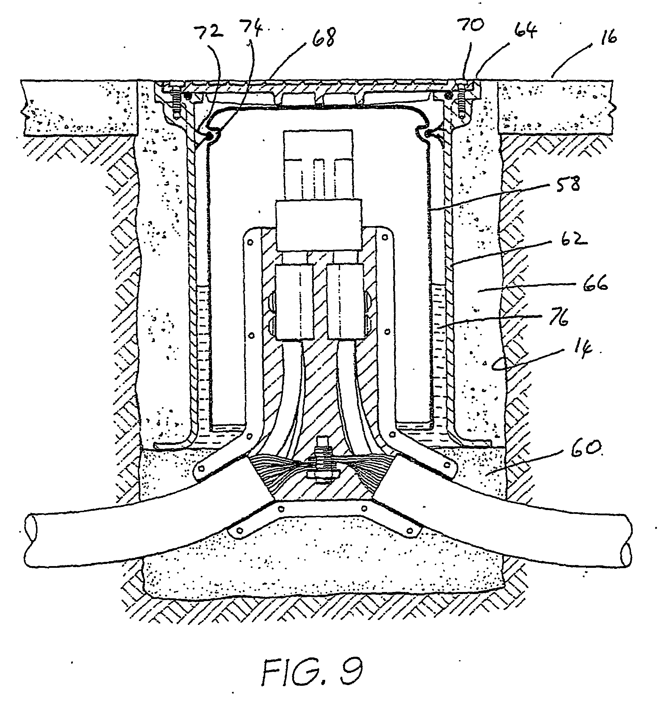

As shown in Fig. 9, a cylindrical permanent outer housing in the form of a shutter 62 will then be placed in the excavation so as to stand on the upper surface of the sand layer 60 as shown. The upper edge 64 of the cylindrical shutter is flush with the ground level 16. A concrete mix 66 may then be filled into the annular space between the excavation 14 and the shutter 62 which rigidly secures the shutter 62 in position within the excavation 14. A cap 68 is secured to the shutter 62 by means of screws 70, the cap 68 serving to hold the dome 48 in position. Preferably the inner wall of the shutter 62 has a detent 72 projecting inwardly towards the dome 58 and the dome 58 includes notches 74 with which the detent 72 engages in order to hold the dome 58 in position, even where water 76 has entered into the annular space between the dome 58 and the shutter 62. In practice, where it is desired to inspect the connection or operate the switches, the lid 68 will be removed and the water 76 will be pumped or suctioned out of the annular space between the dome 58 and the shutter 62 to ensure that the dome does not float upwardly, thereby exposing the connection to immersion by the water 76.

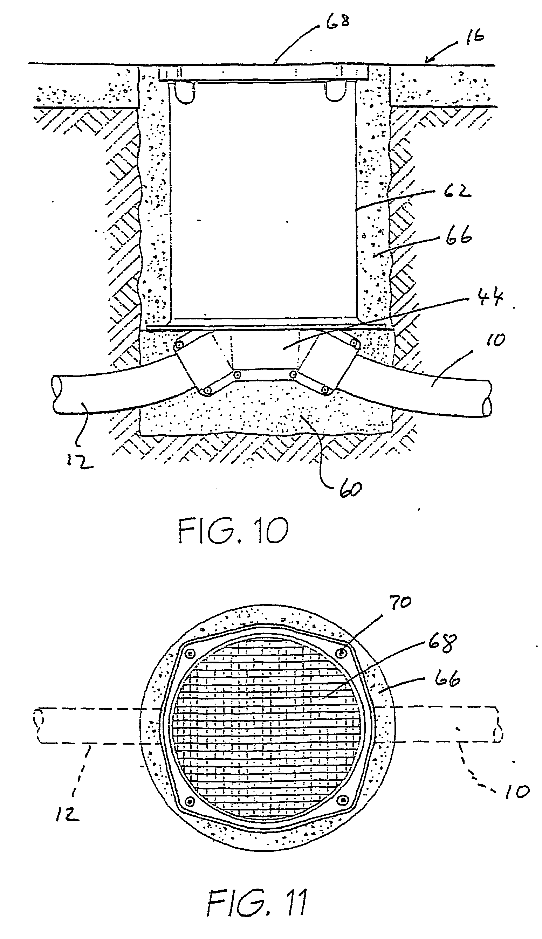

Fig. 10 depicts the assembly in its fully completed condition and Fig. 11 depicts the assembly, in plan view, with the cables 10 and 12 extending laterally to opposite sides of the connection.

It will be appreciated that the invention is not limited to the form of assembly depicted in the drawings. For example, where the cable is to be connected have a lesser or greater curvature the angles of the apertures 48 might differ from those described herein. In addition, the form of the housing 44 may differ for different forms of connection arrangements. Where more than two cables are to be connected together, clearly there will need to be a different arrangement of housing so that if three cables were to be connected together there might need to be a housing comprised of three substantially identical shells.

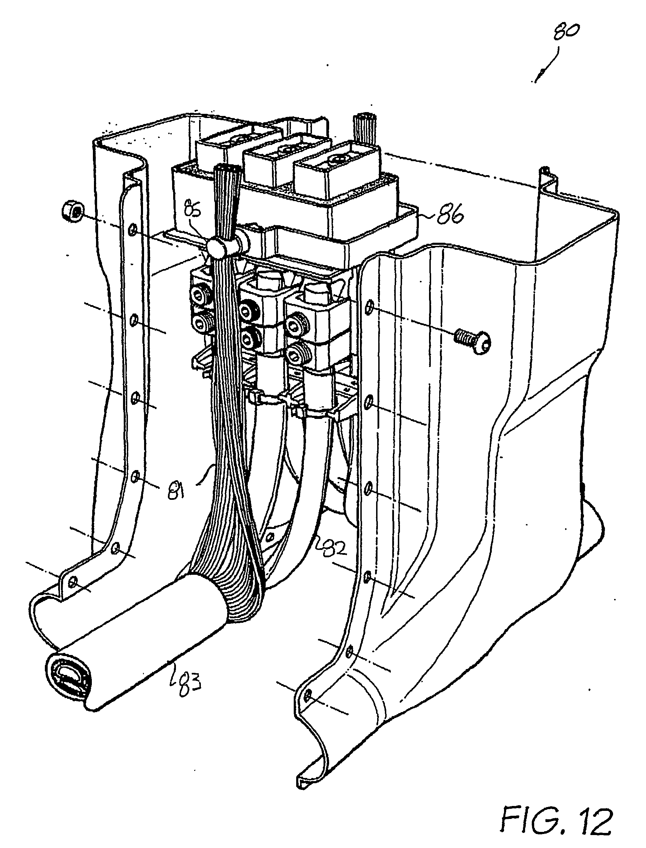

Alternative arrangements are possible. One such alternative arrangement will now be described with reference to Fig. 12 to Fig. 15.

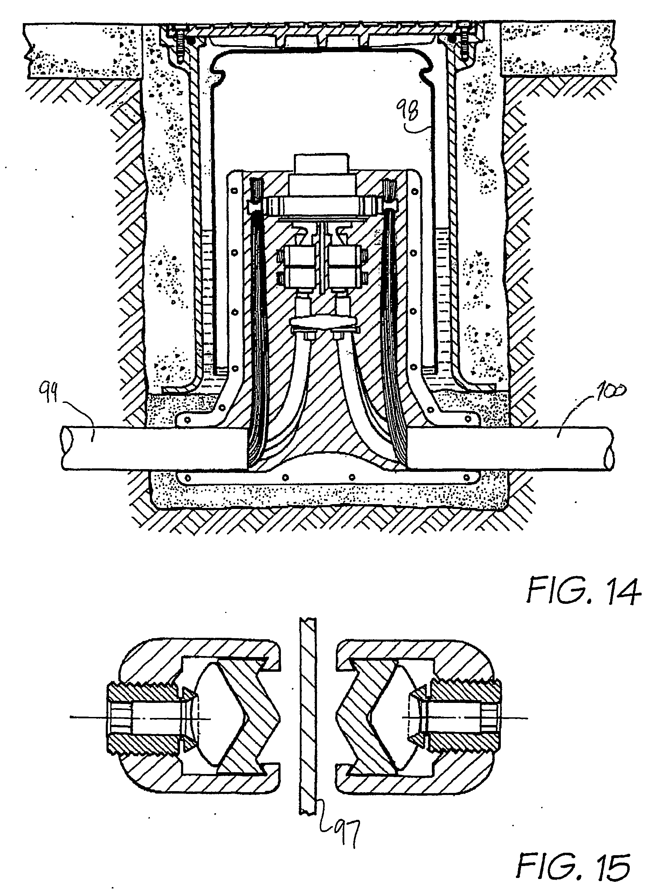

In Fig. 12, there is shown a modified embodiment 80 which allows for horizontal cables to enter the casing arrangement. This can be seen clearly from Fig. 14 which shows a sectional view through an assembled arrangement. In Fig. 12, the neutral lines 81 and positive phases e.g. 82 are bent after exiting of the combined section cable 83. The neutral cable is drawn together and passed through an aperture within bolt 85 which is interconnected to a bracket 86. This allows for independent interconnection of the neutral line and testing thereof.

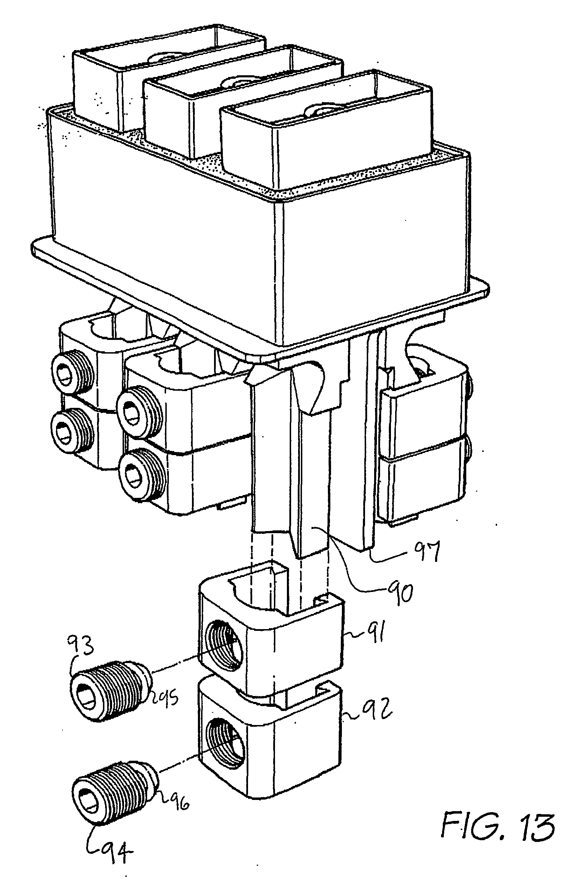

Turning to Fig. 13, the sector cables (not shown) are interconnected with a mating conductive plate 90 by means of clamping units 91, 92 and clamping bolts 93, 94. The clamping bolts 93, 94 include shear bolt ends which shear and compress the sector cable upon insertion. This can be seen in Fig. 15 which illustrates a sectional view through the to connector box. The connector box is separated by an insulating plate 97 during operation. Fig. 14 illustrates the assembled form of the arrangement which also includes a bell cover 98. The arrangement of Fig. 14 providing the benefits that cables 99 and 100 enter the arrangement in a horizontal manner.

Further altenative arrangements are possible. Depending on requirements different forms of sector cables may be present. For example, in some environments 4 core sector cables may be used rather than 3 core wave cable. Further it may be desirable to tape off a distribution feed from the main sector cable.

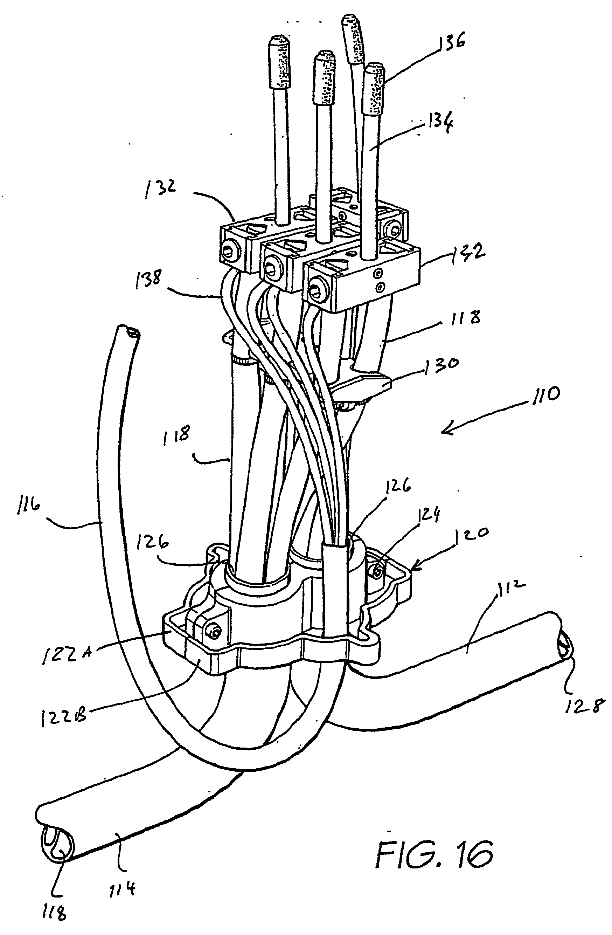

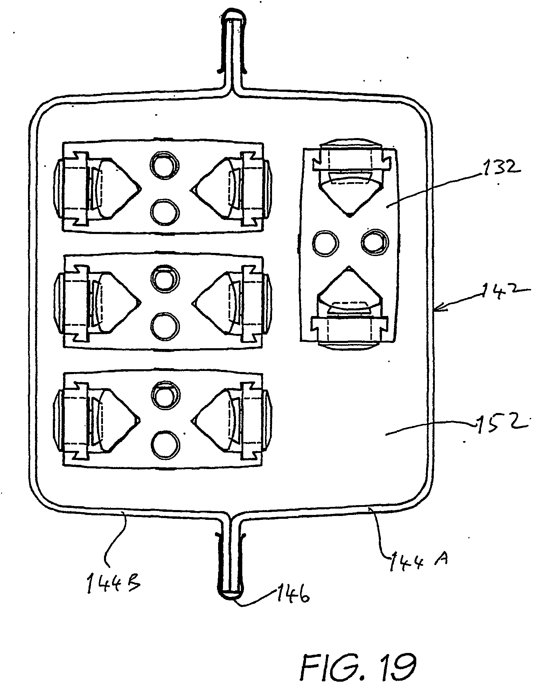

An alternative distribution system will now be described. Referring initially to Figs. 16 to 24, an electrical connection and distribution system 110 provides a relatively simple arrangement for connecting together two multiphase conduits, numbered 112 and 114, and allowing a distribution conduit or conduits 116 to be connected at this connection point. Figs. 16 to 23 show a single distribution cable 116 but clearly it will be possible to have a plurality of distribution cables 116 should this be desirable. The system 110 shown in the drawings is suitable for use distributing electricity in an urban electricity distribution network and in the embodiment shown the conduits 112 and 114 have four "phase conduits" 118 which are to be connected together. That is to say, the conduits 112 and 114 are electrically connected to each other via the system 110.

The conduits 112 and 114 are each bent through 90° at the point of connection and pass upwardly through a base member 120 which is formed in two halves 122A and 122B which are mirror images of each other and are held together by nut and bolt assemblies 124. The assembled base member 120 defines a pair of parallel apertures 126 and the conduits 112 and 114 pass through a respective one of those apertures 126 as shown. Typically the base member 120 will be assembled around the two aligned conduits, the external sheathing 128 will then be removed from the conduits above the base number to expose the phase conduits 118 extending upwardly from the base member 120. At this point a clamping and spacer member 130 can be fitted to the phase conduits 118 to hold the phase conduits 118 in their correct positions relative to each other to thereby allowing connector blocks 132 to be mounted to the exposed upper ends of the phase conduits 118. As shown in Fig. 16, since there are four phase conduits 118 in each conduit 112, 114 there will be four connector blocks 132 to provide the necessary connections. The connector blocks 132 are described in more detail below.

Extending upwardly from the connector blocks are respective testing conduits 134 which are capped with insulated caps 136, the testing conduits 134 being used for testing purposes in the event of a breakdown in the electrical distribution network.

The distribution conduit 116 is also four phase conduit and the individual distribution phase conduits 138 connect to respective connector blocks 132 in a manner described in more detail below.

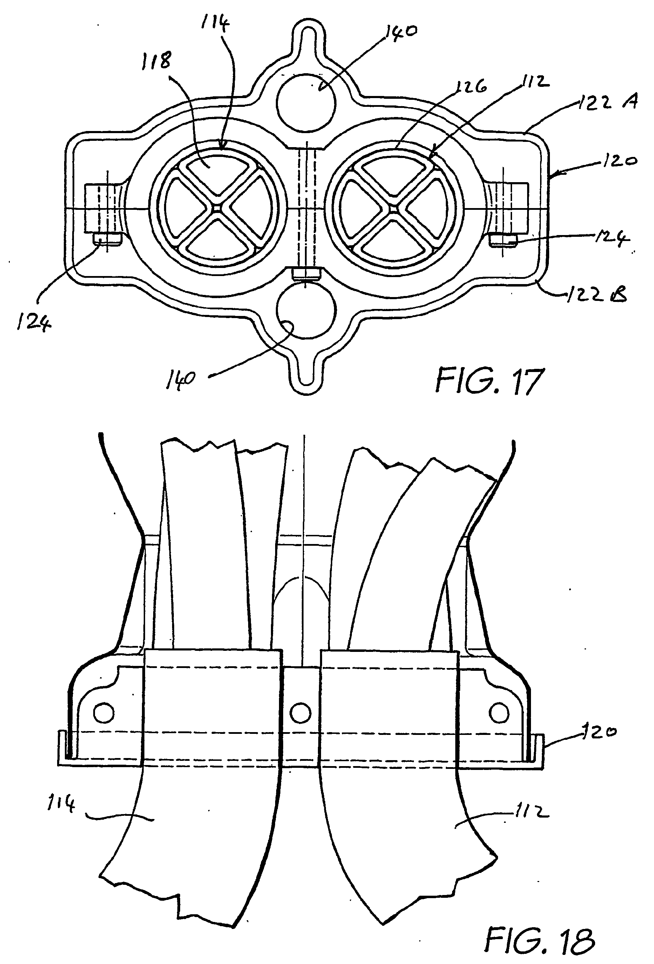

The manner in which the conduits 112 and 114 pass through the base member 120 is shown in more detail in Figs. 17 and 18 of the drawings. A suitable mastic material can be used to ensure that moisture proof seal is achieved at the apertures 26 where the conduits pass through the base member. It will be noted that the base member has a pair of side openings 140 to allow for distribution cables 116 to pass from the connector blocks to the point of power utilisation.

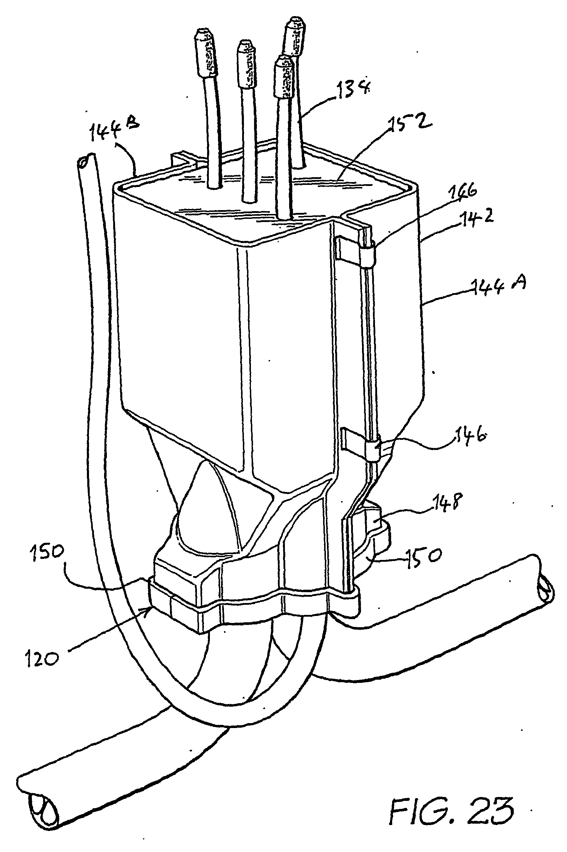

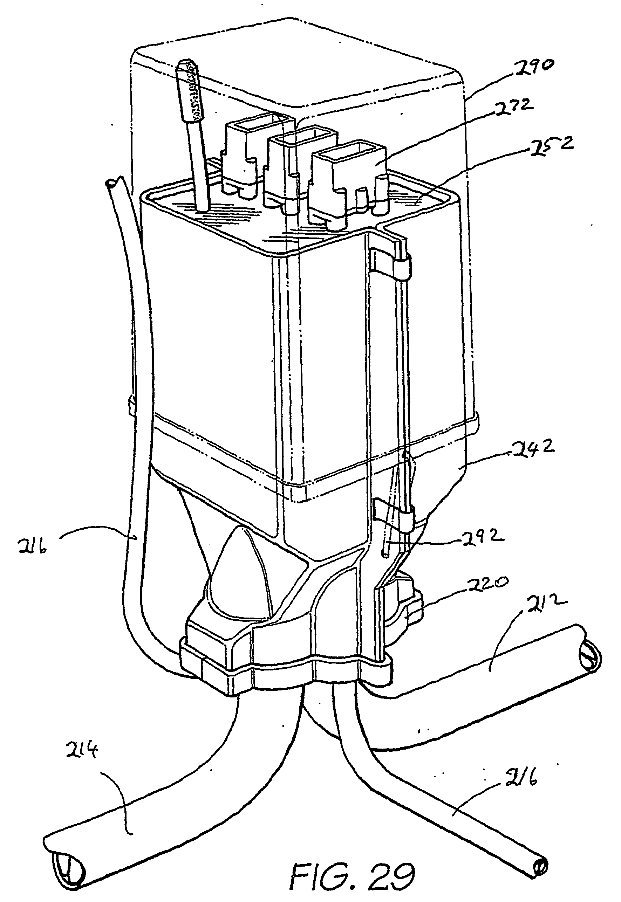

Once the phase conduits 118 and the distribution conduits 116 have been connected to the connector blocks 132 all of the conduits will be encapsulated within an upwardly open receptacle 142, best shown in Fig. 23 of the drawings. The receptacle 142 is formed in two parts, 144A and 144B, which are held together by clips 146. The lower portion 148 of the receptacle 142 is configured to engage with a lip 150 defined around the periphery of the base member 120. Thus, the lower portion 48 of the receptacle 142 fits inside that lip 150 in neat sliding fit, the lip 150 assisting to hold the receptacle 142 in a assembled configuration. A mastic material can be used to seal the receptacle to the base 120. Once the receptacle 142 is in position, a settable electrically insulating material such as a resin material 152 is poured into the open top of the receptacle 142 to completely encapsulate all of the conductors and the connector blocks 132. It is only the testing conductors 134 which project upwardly out of the resin material 152 to allow for the aforementioned testing procedures. It is envisaged that the resin material 152, once set, will have the effect of excluding moisture from the entering and interfering with the operation of the system. It is also envisaged that a dome shaped cover will be fitted over the receptacle 142, in the manner shown in Fig. 29 of the drawings, the cover performing in the manner of a "diving bell" to ensure the exclusion of water from the distribution system, even in situations where the assembly is submerged under water as occurs from time to time in underground insulations.

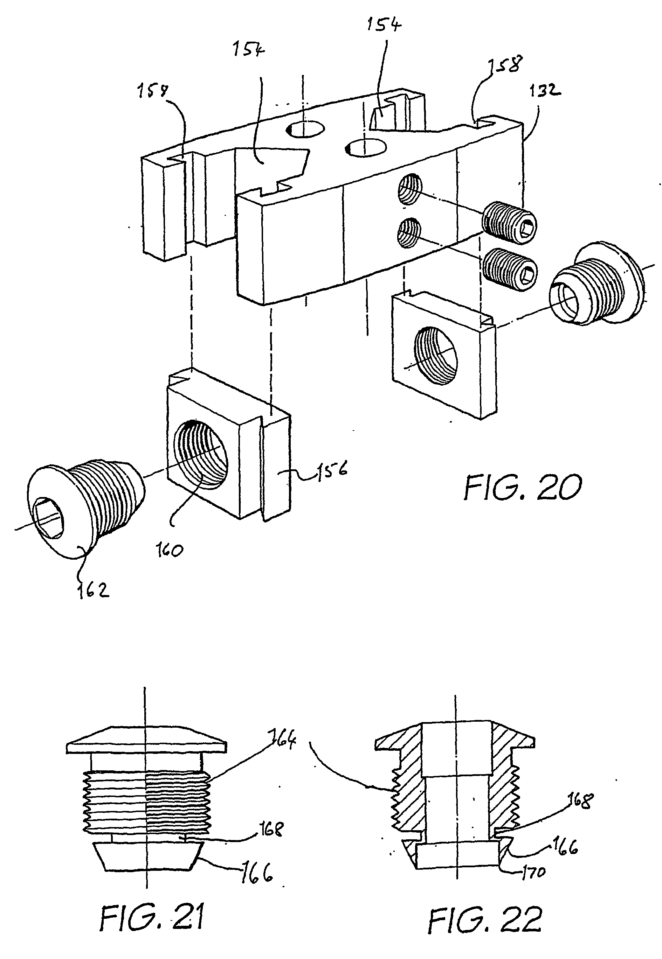

As shown in Fig. 20 of the drawings, the connector blocks 132 are formed of solid blocks of metal, typically brass, and have two v-shaped grooves or slots 154 formed therein adapted to receive the phase conduits 118 therein. Once the conduits are in position in the grooves 154 a closure plate 156 is inserted into position between guides 158, the closure plates 156 having threaded bores 160 passing there through into which threaded studs 162 are screwed, the studs 162 being adapted to press against the conduits located in the grooves 154 to clamp the conduits to the connector blocks 132.

The threaded studs 162 are shown in more detail in Figs. 21 and 22. It will be noted that the studs include a rearward threaded portion 164 and forward engagement portion 166, the two portions being connected together by a frangible neck 168. The leading end of the forward portion 170 is sharp and will tend to dig into the conduit located in the groove 154. Further tightening of the studs 162 will have the effect of shearing the neck 168. The net result of this arrangement is that a forward and rearward portions of the studs 162 will form a face to face contact with each other and the leading end 170 of the stud will be, at least to some extent, embedded in the conduit. Oxidation of the conduit will not reduce the quality of the contact between the stud and the conduit.

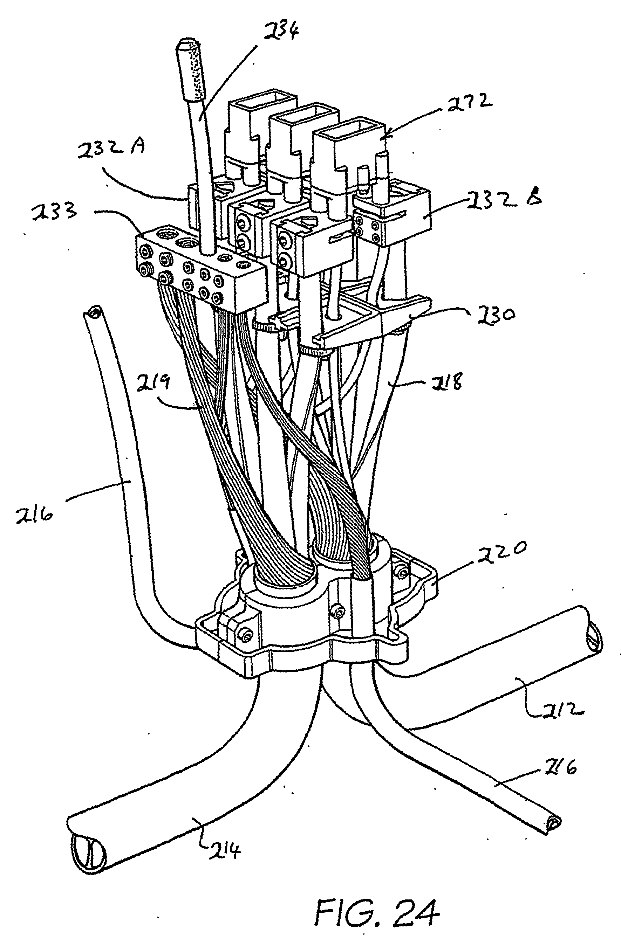

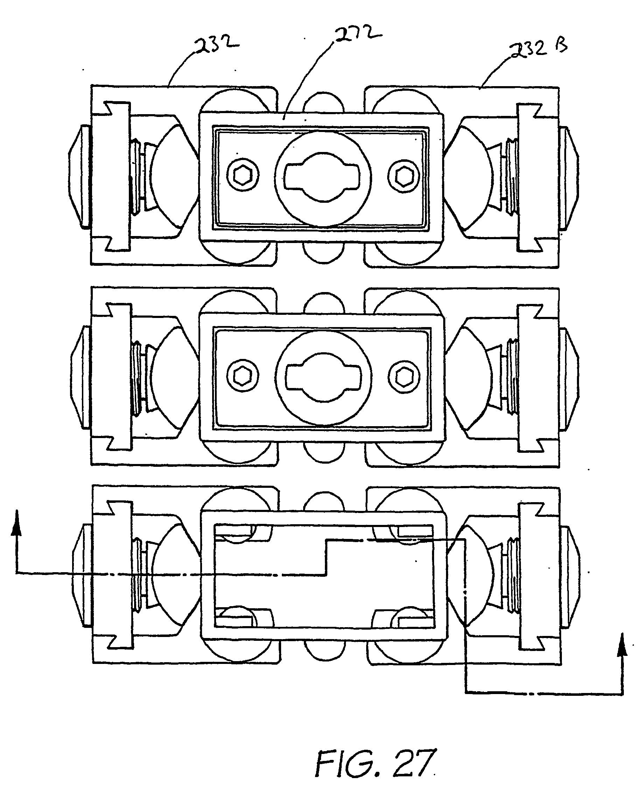

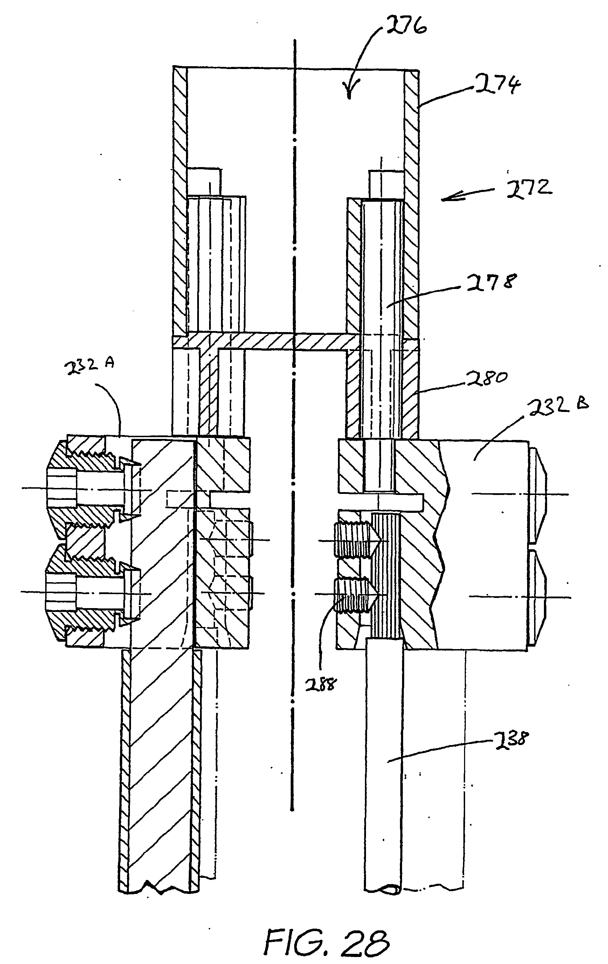

Turning now to Figs. 24 to 29 of the drawings a further embodiment is shown which is similar to that of the previous embodiment except that this embodiment includes a switching arrangement.

As shown, two multiphase conduits 212 and 214 pass through a base member 220 and the outer sheathing of the conduits is stripped off the phase conduits 218 and the phase conduits are connected to connector blocks 232. In this embodiment, however, the multiphase conduits have an outer sheath of 219 conductor strands which form a neutral or earth line for the conduits 212 and 214. The outer conductor sheaths 219 connect to a connector block 233 which in turn has a testing conduit 134 mounted thereto. Distribution conduits 216 are connected to the connector blocks 232 and 233.

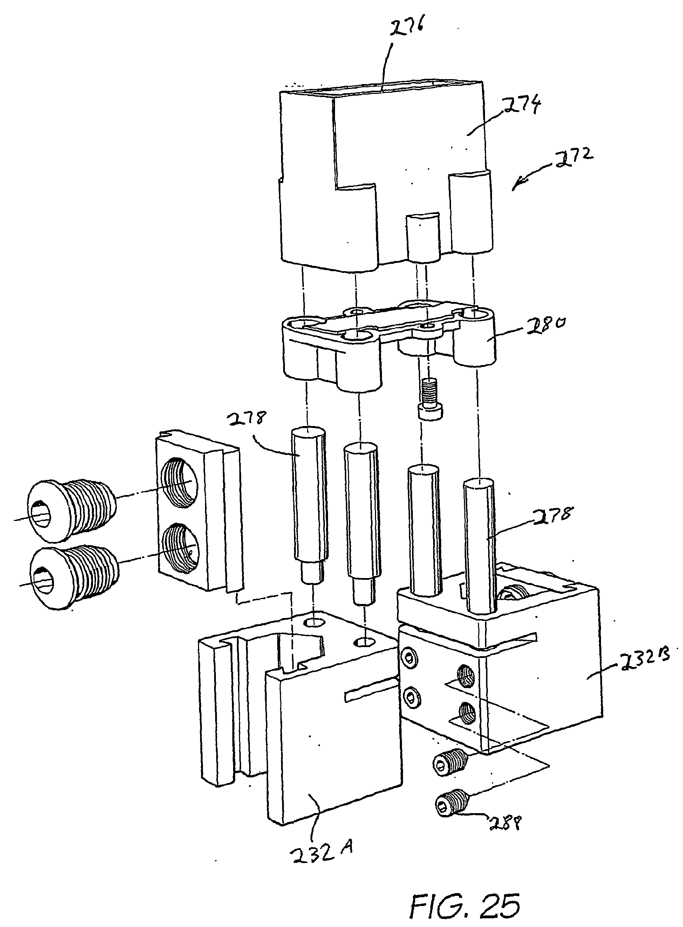

It will be noted that the connector blocks 232 are formed in two halves marked as 232A and 232B. These two halves in each case are connected together by switching device 272 which is shown in detail in Figs. 25 to 28 of the drawings. The switching device 272 includes a rectangular housing 274, formed of a electrically insulated material, having a rectangular passageway 276 in the upper side thereof. The two connector blocks 232A and 232B each have a pair of conductor studs 278 mounted thereto, and the two connector blocks 232A and 232B are held together and in alignment with each other by a spacer device 280. The studs 278 pass into the interior of the housing 274 and can be electrically connected together by a bridge device 282 which is slidable into the passageway 276. The bridge device 282 has a handle 284 which, when the bridge device 282 is fully inserted into the passageway 276 the handle 284 will be twisted to rotate a cam (not shown) which causes a pair of conductors 286 to move apart into electrical contact with the studs 278. Thus, when the bridge device 282 is removed from the passageway 276 there will be no electrical contact between the two connector blocks 232A and 232B.

The distribution conductors 238 will be connected to the conductor blocks 232A and 232B by means of threaded studs 288.

Once the conductors have all been connected to the conductor blocks 232A and 232B, a receptacle 242 will be fitted around the conductors as shown in Fig. 29 and in much the same manner as described previously with reference to Fig. 23. A suitable resin material 252 will then be poured into the receptacle 242 to encapsulate the conduits, thereby preventing the ingress of moisture into the assembly in underground locations. A dome shaped housing 290 may then be located around the outside of the receptacle 242 and tied into position using straps 292. The housing 290 will act in the manner of a diving bell to prevent water coming into contact with the connector blocks, even in situations where the entire installation is submerged under water as may happen from time to time in underground installations.

It will be noted that when the resin material 252 has been poured into the receptacle 242 the switch mechanisms 272 remain above the upper surface of the resin material 252. Thus, at any time, the switches may be either open or closed, depending upon the requirements of the network. It will be appreciated that even with the housing 290 removed, there is no exposed live contact surface which a maintenance worker could inadvertently touch during maintenance operations. Thus, it will be possible to switch the assemblies even when power remains connected to the installation in use.

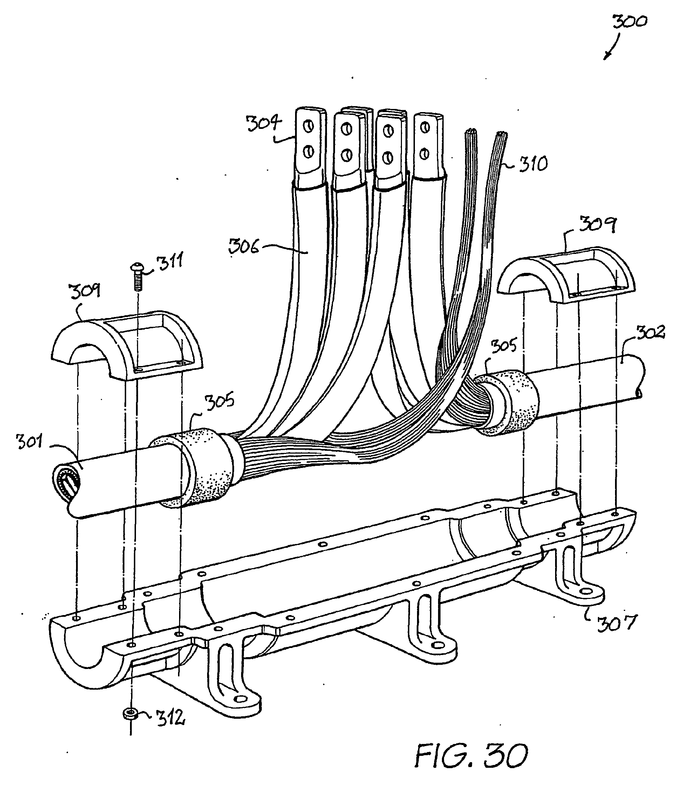

Turning now to Fig. 30, there is illustrated a further alternative embodiment. 300. This embodiment is designed to interconnect two wave core sector cables 301, 302. The outer covering of the sector cable is removed and the ends of each sector cable eg. 304 which, in this case, are assumed to be formed from aluminium, are formed as illustrated 304. A rubberised sleeve 305 is placed around each end of the cable 301, 302. The cable 301, 302 is placed within a base member 307 and affixed thereto by means of clamping units 309 which utilise a series of screws and bolts 311, 312.

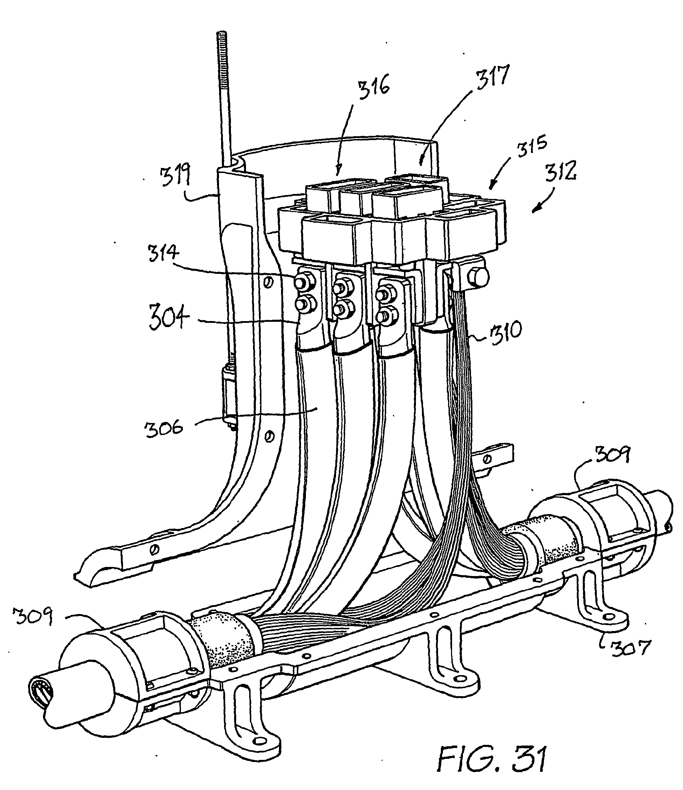

Turning now to Fig. 31, the sector cables are then bolted to a top connecting unit 312. The connecting unit is similar to the unit depicted in Fig. 24 however, the number of simplifications have been made thereto as a result of the pre treatment of the end 304 of each of the phase cables 306. Due to the end treatment of the ends of the said cable 304 a simplified form of screw bolt 314 can be utilised. Additionally, connecting unit at 312 contains a series of storage cavities eg 315 for storage of switches when not in use. These switches are designed to be inserted in cavities eg 316 as previously discussed. Additionally, a neutral cavity 317 is provided preferably of different dimensions to the three phased cavities eg 316. The neutral cavity 317 interconnecting neutral wires eg 310.

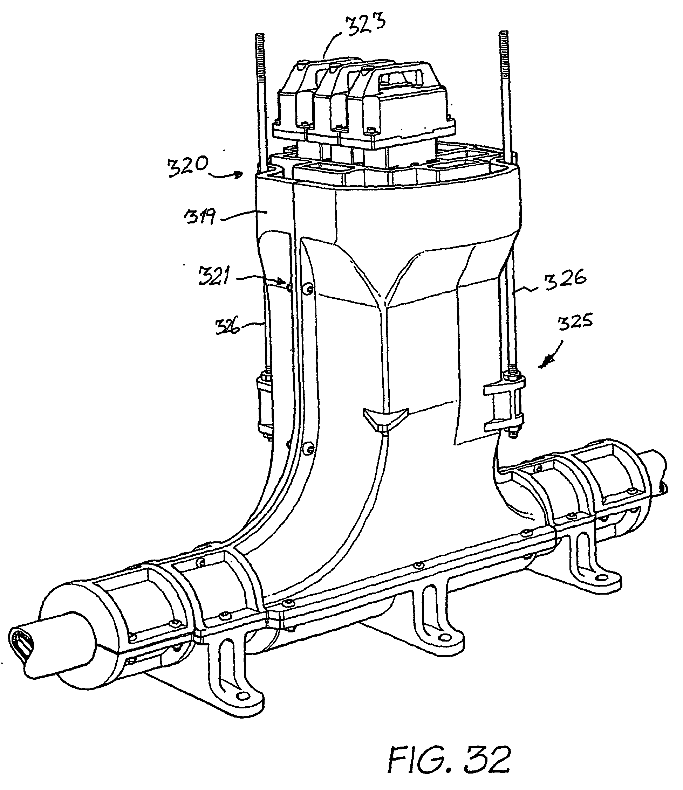

Two outer shell pieces, one of which is shown in Fig. 31 are provided for encasing the arrangement. In Fig. 32, there is illustrated the outer shells in an assembled form. The outer shells include scalloped edged portions 320 and are joined together by a series of screw and nut arrangements eg 321. The casing 319 provides a waterproof sealing of the sector cable interconnection. The internal portions of the casing 319 can then be filled with an insulating resinous material which sets so as to provide for a fully insulated interconnect

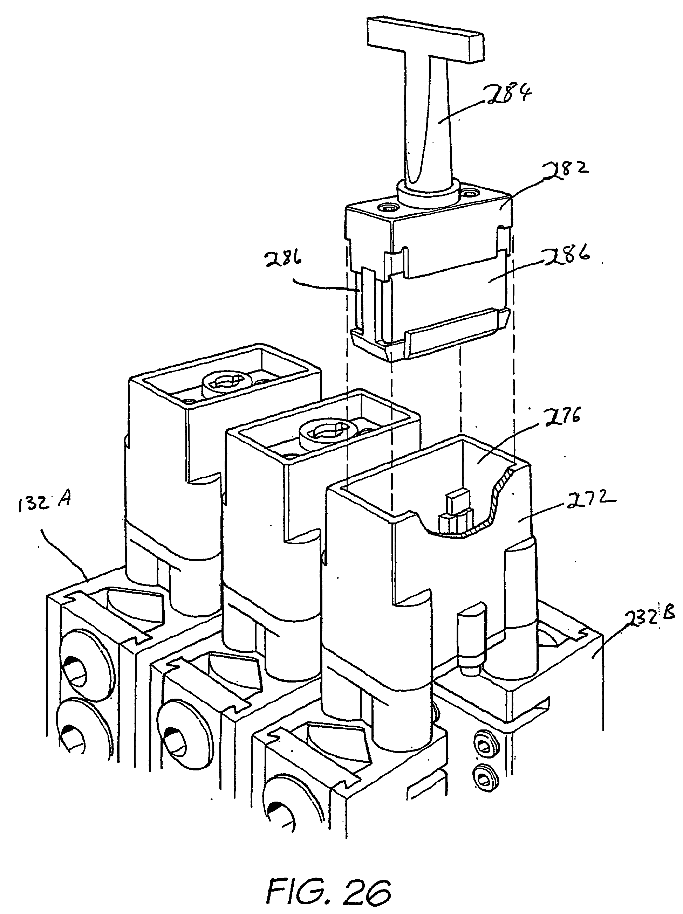

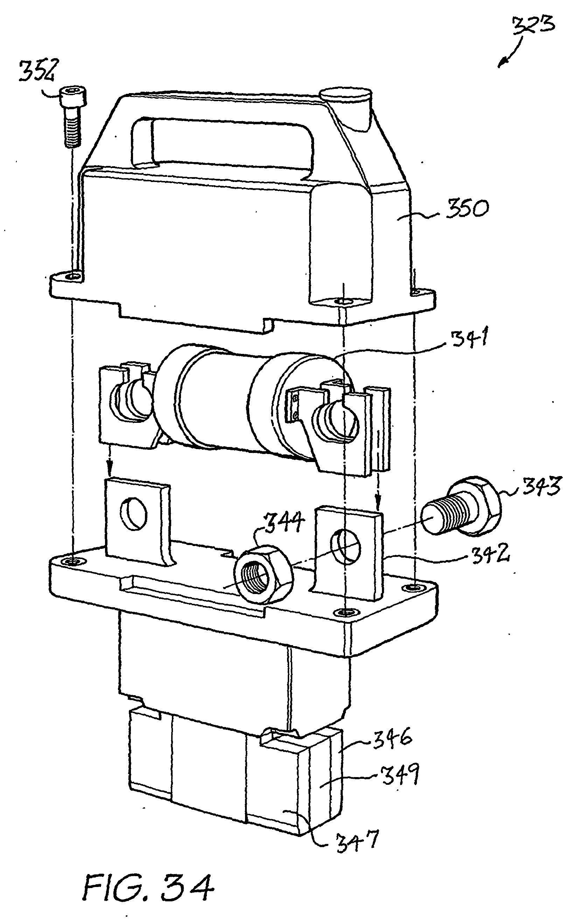

Whilst Fig. 26 illustrated a bridge or link switch for insertion into a corresponding cavity, Fig. 32 illustrates a series of fuse arrangements eg 323, the details which are described hereinafter with reference to Fig. 34.

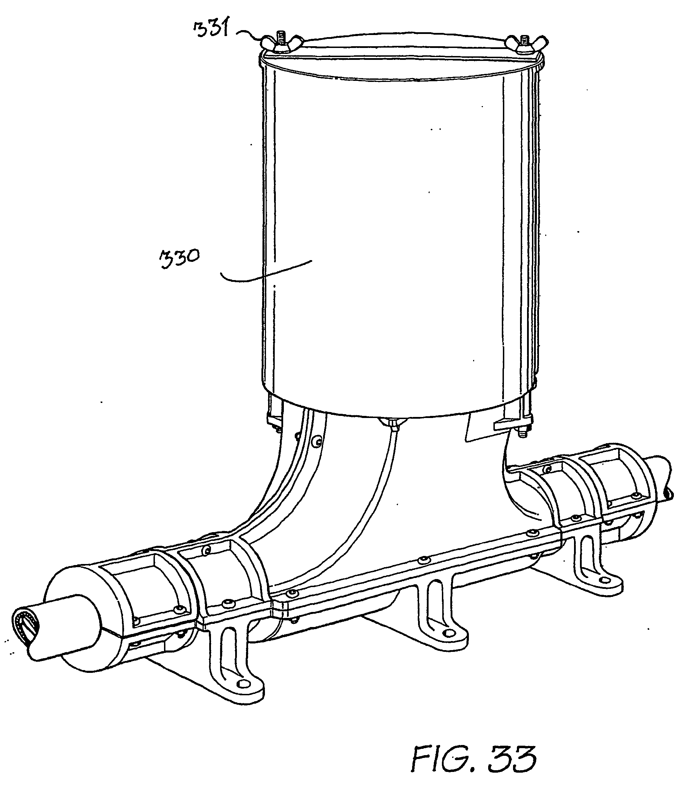

The outer portion of the casing 319 includes a stage 325 for connecting a rods 326. The rods 326 are utilised to couple a dome 330 as illustrated in Fig. 33 utilising wing nuts eg 371. The dome 330 is again utilised to provide for a diving bell type effect wherein when a chamber containing the interconnection arrangement is flooded, an air gap is formed providing protection against ingress of water.

Turning now to Fig. 34, there is illustrated one form of fuse switch 323. The fuse switch includes a fuse 341 which is interconnected to a base plate leaf portion 342 by screw 343 and bolt 344. The leaf portion 342 is in turn interconnected to conductive plates eg 346, 347 which are formed within a resilient compound 349 which can comprise a rubber or a polymer with similar rubber like resilient properties. The rubber 349 is designed to resiliently expand the two plates 346, 347 such that when the fuse 323 is placed within a mating cavity (eg 316 of Fig. 31) the plates 346, 347 and rubber 349 undergo a resilient compression form a strong contract with corresponding mating services. A plastic cover 350 is also provided for detachable mounting over the fuse 341 by means of screws e.g. 352.

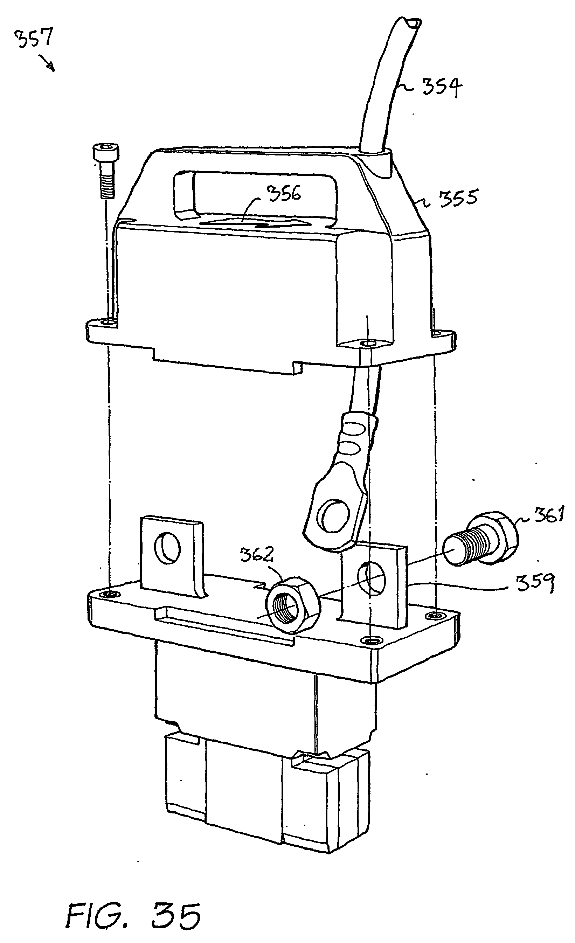

Often, the situation may arise where a transformer interconnecting a sectored cable arrangement fails. Hence, there may be an urgent need to supply electricity via a sector cable arrangement. The interconnection system of the preferred embodiment provides for the opportunity for rapid supply of electricity from a generator source. The arrangement of Fig. 34 can be adapted as shown in Fig. 35 so as to provide for a generator power source. The adaption is provided so that a cable 354 is inserted through the plastic covering 355 which includes an arrow 356 showing the direction the distribution unit 357 should be inserted. The cable 354 is interconnected to the conductive leaf 359 by means of bolt and nut arrangement 361, 362. The unit 357 can be rapidly deployed when a generator power source is required. By opening the top of the supply unit and changing any inserted bridge switch or fuse switch to a generator source, power can be rapidly supplied to one or more of the sector cables.

It will be evident that the embodiments have a number of advantages. These include the high tolerance bell housing allowing for full submersion of the switch. Further, the rubber moulding arrangement illustrated in Fig. 34 provides an alternative form of link switch arrangement. The system is touch safe which provides for a safer working environment. The slots e.g. of Fig. 31 provide for a place to spare links and keys when not used. Further, the arrangement of Fig. 32 provides for a neutral housing.

## Claims

1. A detachable switch unit (323) for use in electrically interconnecting at least two low voltage high current carrying cables (301, 302) suitable for carrying a household or industrial premises power supply and which are attached to conductive surfaces formed within a mating cavity (317), said detachable switch unit including:
at least one conductive elongated element (346, 347);
a resilient insulating material (349) adjacent said conductive elongated element;
wherein, upon insertion into a corresponding cavity, the resilient material undergoes resilient compression thereby firmly engaging the conductive elongated element against a wall of a mating cavity; and
wherein said switch unit is adapted to be repeatedly inserted in said cavity to provide electrical interconnection between the cables and removed therefrom on demand, with said resilient insulating material each time undergoing resilient compression, thereby firmly engaging the conductive elongated element against the wall of the mating cavity.

2. A unit as claimed in claim 1 wherein there is at least two conductive elongated elements and the resilient material is interposed between the elongated element such that, upon insertion into a corresponding mating cavity, the resilient material undergoes a resilient compression, thereby firmly engaging both of said conductive elongated elements against opposed walls of said mating cavity.

3. A unit as claimed in claim 1 wherein each of the cables is interconnected to at least two conductive surfaces located on opposed walls of said cavity and said unit includes a matching pair of two elongated elements for engaging said two conductive surfaces upon insertion of said unit into said cavity.

4. A unit as claimed in claim 1 wherein a distal end of said conductive elongated element includes a bevelled edge which, upon insertion of said unit into said cavity, initially engages with a corresponding conductive surface in said cavity.

5. A unit as claimed in any one of claims 1 to 4 wherein said switch unit includes a fuse (341) electrically interconnected between said first and second cables.

6. A unit as claimed in any one of claims 1 to 4 wherein said unit includes a generator tap off cable (354) electrically interconnected to said conductive elongated element.

7. A unit as claimed in claim 5 wherein said fuse is detachably mounted on said switch unit.

8. A unit as claimed in claim 7 wherein said unit includes first and second conductive fuse interconnection elements (342) and said fuse is of an elongated form and includes two conductive mating ends detachably interconnected with said interconnection elements.

## Patentansprüche

1. Ablösbare Schaltereinheit (323) zur Verwendung bei der elektrischen Schaltung von wenigstens zwei Niederspannung-Hochstrom-führenden Kabeln (301, 302), die zum Führen einer Haushalts- oder Industriegebäude-Stromversorgung geeignet sind und die an leitenden Oberflächen befestigt sind, die in einem Anschluss-Hohlraum (317) gebildet sind, wobei die ablösbare Schaltereinheit umfasst:
wenigstens ein leitendes, gestrecktes Element (346, 347);
ein elastisches Isoliermaterial (349), das zu dem leitenden, gestreckten Element benachbart ist;
wobei, bei Einführung in einen entsprechenden Hohlraum, sich das elastische Material einer elastischen Kompression unterzieht, wobei **dadurch** das leitende, gestreckte Element an einer Wand eines Anschluss-Hohlraums fest einrastet; und
wobei die Schaltereinheit angepasst ist, um wiederholt in den Hohlraum eingeführt zu werden, um eine elektrische Schaltung zwischen den Kabeln bereitzustellen, und bei Bedarf davon entfernt zu werden, wobei sich das elastische Isoliermaterial jedes Mal einer elastischen Kompression unterzieht, wobei **dadurch** das leitende, gestreckte Element an der Wand des Anschluss-Hohlraums fest einrastet.

2. Einheit gemäß Anspruch 1, wobei wenigstens zwei leitende, gestreckte Elemente vorhanden sind, und das elastische Material zwischen die gestreckten Elemente derart zwischen gelegt ist, dass sich bei Einführung in einen entsprechenden Anschluss-Hohlraum das elastische Material einer elastischen Kompression unterzieht, wobei beide der leitenden, gestreckten Elemente an gegenüberliegenden Wänden des Anschluss-Hohlraums fest einrasten.

3. Einheit gemäß Anspruch 1, wobei jedes der Kabel mit wenigstens zwei leitenden Oberflächen geschaltet ist, die an gegenüberliegenden Wänden des Hohlraums angeordnet sind, und die Einheit ein passendes Paar von zwei gestreckten Elementen zum Einrasten an den zwei leitenden Oberflächen bei Einführung der Einheit in den Hohlraum umfasst.

4. Einheit gemäß Anspruch 1, wobei ein Distalende des leitenden, gestreckten Elements einen abgeschrägten Rand umfasst, der, bei Einführung der Einheit in den Hohlraum, anfangs mit einer entsprechenden leitenden Oberfläche in dem Hohlraum einrastet.

5. Einheit gemäß irgendeinem der Ansprüche 1 bis 4, wobei die Schaltereinheit eine Sicherung (341) umfasst, die zwischen das erste und zweite Kabel elektrisch geschaltet ist.

6. Einheit gemäß irgendeinem der Ansprüche 1 bis 4, wobei die Einheit ein Generatorabgangskabel (354) umfasst, das mit dem leitenden, gestreckten Element elektrisch geschaltet ist.

7. Einheit gemäß Anspruch 5, wobei die Sicherung an die Schaltereinheit ablösbar montiert ist.

8. Einheit gemäß Anspruch 7, wobei die Einheit erste und zweite leitende Sicherungsschaltelemente (342) umfasst, und die Sicherung eine gestreckte Form aufweist und zwei leitende Anschlussenden aufweist, die mit den Schaltelementen ablösbar geschaltet sind.

## Revendications

1. Unité de commutation amovible (323) destinée à une utilisation pour interconnecter électriquement au moins deux câbles d'acheminement haute intensité basse tension (301, 302), adaptés pour acheminer l'alimentation électrique d'une maison ou de locaux industriels et qui sont fixés à des surfaces conductrices formées à l'intérieur d'une cavité conjuguée (317), ladite unité de commutation amovible comprenant :
au moins un élément conducteur allongé (346, 347) ;
un matériau élastique isolant (349) adjacent audit élément conducteur allongé ;
dans laquelle, lors de l'insertion à l'intérieur d'une cavité correspondante, le matériau élastique subit une compression élastique engageant de ce fait fermement l'élément conducteur allongé contre une paroi d'une cavité d'accouplement ; et
ladite unité de commutation étant adaptée pour être insérée de manière répétée dans ladite cavité pour fournir une interconnexion électrique entre les câbles et l'en retirer sur requête, ledit matériau élastique isolant subissant à chaque fois une compression élastique, engageant de ce fait fermement l'élément conducteur allongé contre la paroi de la cavité conjuguée.

2. Unité selon la revendication 1 dans laquelle il y a au moins deux éléments conducteurs allongés et le matériau élastique est interposé entre les éléments allongés de telle sorte que, lors de l'insertion à l'intérieur d'une cavité conjuguée correspondante, le matériau élastique subit une compression élastique, engageant de ce fait fermement lesdits deux éléments conducteurs allongés contre les parois opposées de ladite cavité conjuguée.

3. Unité selon la revendication 1 dans laquelle chacun des câbles est interconnecté à au moins deux surfaces conductrices situées sur les parois opposées de ladite cavité et ladite unité comprend une paire conjuguée de deux éléments allongés destinés à engager lesdites deux surfaces conductrices lors de l'insertion de ladite unité à l'intérieur de ladite cavité.

4. Unité selon la revendication 1 dans laquelle une extrémité distale dudit élément conducteur allongé comprend un bord biseauté qui, lors de l'insertion de ladite unité à l'intérieur de ladite cavité, s'engage initialement avec une surface conductrice correspondante dans ladite cavité.

5. Unité selon l'une quelconque des revendications 1 à 4 dans laquelle ladite unité de commutation comprend un fusible (341) électriquement interconnecté entre lesdits premier et second câbles.

6. Unité selon l'une quelconque des revendications 1 à 4 dans laquelle ladite unité de commutation comprend un câble de dérivation de générateur (354) électriquement interconnecté audit élément conducteur allongé.

7. Unité selon la revendication 5 dans laquelle ledit fusible est monté de manière amovible sur ladite unité de commutation.

8. Unité selon la revendication 7 dans laquelle ladite unité comprend un premier et un second éléments d'interconnexion de fusible conducteurs (342) et ledit fusible est de forme allongée et comprend deux extrémités d'accouplement conductrices interconnectées de manière amovible avec lesdits éléments d'interconnexion.
